# FASCICULE DE BREVET EUROPEEN

(11) **EP 3 420 642 B1**
(45) Date de publication et mention de la délivrance du brevet: **01.12.2021**
(21) Numéro de dépôt: 17706817.8
(22) Date de dépôt: 24.02.2017
(51) Int. Cl.: H04B 1/401, H04B 1/18

(54) **CAPTEUR INTÉGRÉ D'INTERCEPTION DES ÉMISSIONS RADIOÉLECTRIQUES COM/RAD**
EINGEBAUTER SENSOR ZUM ABFANGEN VON RADIOELEKTRISCHEN COM/RAD-EMISSIONEN
BUILT-IN SENSOR FOR INTERCEPTING RADIOELECTRIC COM/RAD EMISSIONS

(30) Priorité: 26.02.2016 FR 1600326
(43) Date de publication de la demande: 02.01.2019
(73) Titulaire: Thales, 92400 Courbevoie (FR)
(72) Inventeur: LEBOURG, Thierry, 92622 Gennevilliers Cedex (FR); SAADA, Renaud, 78851 Elancourt (FR); SENTENAC, Nicolas, 78851 Elancourt (FR)
(74) Mandataire: Lavoix
(86) Numéro de dépôt international: PCT/EP2017/054365
(87) Numéro de publication internationale: WO 2017/144679

(56) Documents cités:
- US-A1- 2006 058 035

## Description

La présente invention est relative au domaine des capteurs d'interception des émissions radioélectriques, que ce soit pour des applications civiles ou militaires.

Le document US 2006/058035 A1 décrit un récepteur de signaux de communication, qui peut détecter la présence d'un signal radar dans un signal reçu.

Dans le monde civil, ce domaine des capteurs d'interception des émissions radioélectriques correspond au contrôle du spectre radiofréquence qui peut être réalisé par des organismes de régulation de fréquence, pour contrôler les allocations fréquentielles ainsi que pour détecter, localiser et identifier les émissions radioélectriques non-autorisées ou perturbatrices.

Dans le monde militaire, ce domaine correspond à des fonctions de surveillance et d'écoute des émissions radar et/ou de radiocommunication à des fins de guerre électronique (fonction de renseignement, fonction de tenue de situation, fonction d'alerte vis-à-vis des émissions menaçantes).

Les émissions radioélectriques sont classées en deux types : les émissions de communication ou COM dans ce qui suit (radiodiffusion, télédiffusion, téléphonie mobile, faisceaux hertziens, communication satellite, radio militaire tactique...) et les émissions radar ou RAD dans ce qui suit (surveillance, navigation, guidage, conduite de tir,...)

En raison, d'une part, de leurs domaines spectraux disjoints et, d'autre part, de leurs modulations temporelles différentes, les techniques mises en œuvre pour intercepter et analyser les signaux radioélectriques RAD et COM sont adaptées et à la nature des formes d'onde RAD et COM et ont conduit à la réalisation de capteurs dédiés à l'interception RAD et des capteurs dédiés à l'interception COM.

De plus, cette interception nécessite la mise en œuvre de plusieurs capteurs RAD ou de plusieurs capteurs COM permettant de couvrir tout ou partie du domaine spectral comportant les bandes HF, VHF, UHF et SHF.

Cependant, la séparation spectrale et temporelle de ces deux types de signaux s'est amenuisée au fil du temps : en effet, l'augmentation des capacités de traitement, en particulier celles des calculateurs, a permis d'exploiter des formes d'onde plus complexes même en large bande, ce qui était impossible antérieurement. Cela a ouvert de nouvelles possibilités pour les émissions de communication (augmentation de la largeur de bande et donc du débit) et des émissions radar (formes d'onde plus complexes donc mieux protégées du brouillage et permettant d'extraire plus d'informations des cibles interceptées).

En conséquence, un capteur d'interception reçoit un mélange de signaux COM et de signaux RAD. S'il s'agit d'un capteur RAD, les signaux COM constituent des signaux parasites qui doivent être éliminés pour analyser les signaux RAD et, réciproquement, s'il s'agit d'un capteur COM, les signaux RAD constituent des signaux parasites qui doivent être éliminés pour analyser les signaux COM. L'absence de traitements d'élimination des signaux parasites perturbe ou dégrade les signaux utiles et par conséquent la qualité de l'analyse de ceux-ci.

De plus, on cherche souvent à caractériser les émissions radioélectriques quelle que soit leur origine (COM ou RAD) ce qui entraîne l'utilisation d'au moins deux capteurs (un capteur RAD et un capteur COM) sur une même plate-forme (véhicule terrestre, aéronef, bâtiment de surface...).

Or ceci augmente la complexité de l'intégration sur la plate-forme. Les ressources matérielles (antennes, récepteurs RF et unités de traitements) étant séparées, cela entraîne une augmentation de la masse, du volume et de la consommation électrique, ainsi qu'une problématique d'intégration des réseaux antennaires du capteur RAD et du capteur COM sur la même plate-forme.

De plus, la vaste étendue du domaine spectral à couvrir implique l'utilisation de plusieurs réseaux antennaires pour chaque capteur RAD et pour chaque capteur COM mis en œuvre.

En conclusion, la juxtaposition d'un capteur COM et d'un capteur RAD est de moins en moins pertinente tant au niveau des performances que des contraintes d'intégration sur la plate-forme.

Il existe donc un besoin pour un capteur d'interception des émissions radioélectriques permettant d'atteindre à l'intégration recherchée.

Pour cela l'invention a pour objet un capteur d'interception des signaux radioélectriques conforme aux revendications.

L'invention consiste en un capteur RAD/COM intégré traitant simultanément les émissions de communication et les émissions radar, dont l'architecture permet une mutualisation d'un maximum de ressources, depuis les antennes de réception jusqu'aux moyens de traitement primaires, seuls les moyens de traitements secondaires étant dédiés soit au traitement des signaux COM soit au traitement des signaux RAD.

Le capteur RAD/COM intégré selon l'invention offre la possibilité de contrôler le spectre radiofréquence et/ou d'intercepter aussi bien des émetteurs radar ou de communication que des systèmes d'arme multifonctions dans des environnements électromagnétiques de plus en plus denses avec enchevêtrement des bandes radar et de communication.

Le capteur RAD/COM intégré selon l'invention présente en outre l'avantage d'être modulaire et d'un encombrement plus faible qu'une solution juxtaposant un capteur de réception RAD et un capteur de réception COM.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une représentation schématique du contexte d'utilisation du capteur RAD/COM intégré selon l'invention ;
- La figure 2 est une représentation schématique sous forme de blocs et à haut niveau de l'architecture du capteur RAD/COM intégré selon l'invention ;
- La figure 3 est une représentation schématique sous forme de blocs de l'étage de réception du capteur RAD/COM intégré de la figure 2 ;
- La figure 4 est une représentation schématique sous forme de blocs de l'étage de traitements d'analyse primaire du capteur RAD/COM intégré de la figure 2 ;
- La figure 5 est une représentation schématique sous forme de blocs de l'étage de traitements secondaires du capteur RAD/COM intégré de la figure 2 ;
- La figure 6 est un graphique temps-fréquence illustrant les différentes segmentations réalisées en parallèle par l'étage de traitements primaire de la figure 4 ; et,
- La figure 7 est un graphique durée-fréquence-bande instantanée illustrant les différents patrons utilisés par le moyen de discrimination de l'étage de traitements primaires de la figure 4.

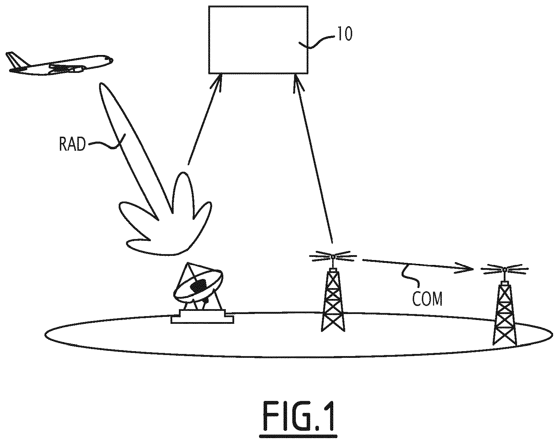

Comme représenté à la figure 1, le capteur 10 d'interception des émissions radioélectriques selon l'invention, aussi dénommé capteur RAD/ COM intégré dans ce qui suit, reçoit et analyse des signaux radioélectriques émis par différents émetteurs, qu'ils correspondent à des émissions radar (émissions RAD) ou à des émissions de communication (émissions COM).

Le capteur 10 RAD/COM intégré présente une architecture permettant de réaliser une analyse primaire des signaux radiofréquences reçus indépendamment de la nature des signaux (émissions RAD ou COM), puis de poursuivre cette analyse (analyse secondaire) par deux types de traitements, un dédiés aux émissions RAD et un autre dédiés aux émissions COM. De cette manière le nombre de composants communs entre les chaînes de traitement RAD et COM est maximisé, en particulier les composants matériels d'acquisition et les ressources de calcul permettant l'analyse primaire. Cette rationalisation du matériel présente l'avantage de réduire l'encombrement du capteur intégré et de faciliter son implantation sur un porteur.

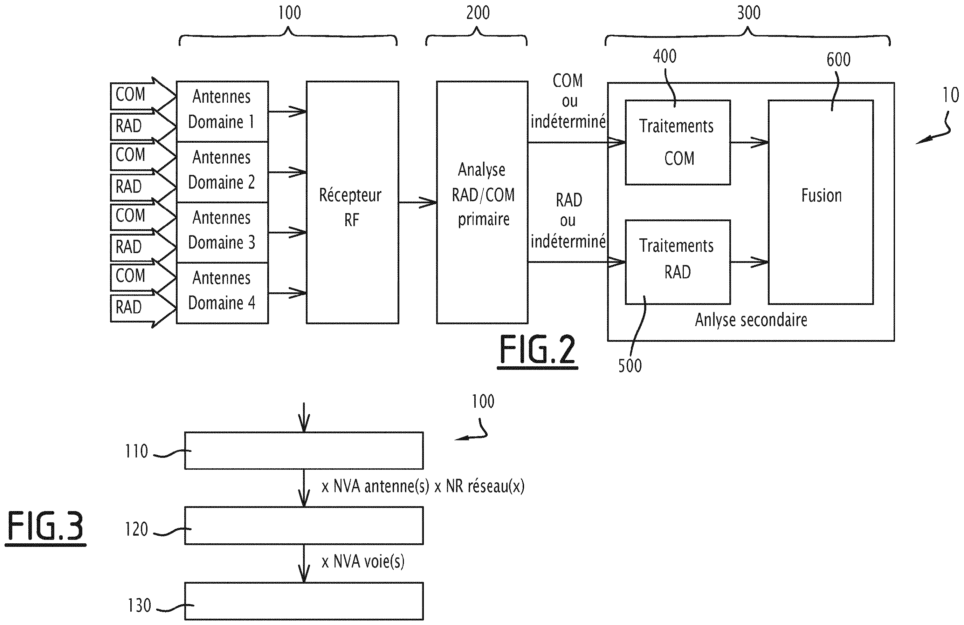

Comme représenté à la figure 2, le capteur 10 comporte un étage de réception 100. Il s'agit d'un étage de mutualisation des ressources matérielles de réception (antennes, récepteurs radiofréquences, conversions analogique-numérique et traitements numériques).

Le capteur 10 comporte un étage de traitements d'analyse primaire 200 pour l'analyse primaire des signaux numériques délivrés par l'étage de réception 100. Plusieurs traitements sont appliqués aux signaux quelle que soit leur nature (émission RAD ou émission COM) et leur forme d'onde (continue ou impulsionnelle, bande étroite ou large bande). Cette analyse primaire, indépendante de la nature de l'émission interceptée, permet pour chaque signal élémentaire de le caractériser, notamment par sa durée, sa date d'arrivée (TOA ou « Time Of Arrivai » en anglais), sa bande instantanée, sa fréquence centrale, son amplitude et éventuellement sa direction d'arrivée (DOA ou « Direction Of Arrivai » en anglais). Le dernier traitement effectué à l'étage 200 consiste, à partir des caractéristiques du signal élémentaire et de connaissances a priori, à estimer le type (RAD, COM ou indéterminé) de l'émetteur ayant engendré ce signal.

Le capteur 10 comporte, en aval de l'étage 200 de mutualisation d'un certain nombre de traitements, un étage 300 de traitements d'analyse secondaire. L'étage 300 comporte une ou plusieurs chaînes 400 de traitement du signal et/ou de données dédiées aux signaux COM et une ou plusieurs chaînes 500 de traitement du signal et/ou de données dédiées aux signaux RAD. Le dernier traitement éventuellement effectué à l'étage 300 est un traitement de fusion, réalisé par un module de fusion 600, des données entre les sorties des différentes chaînes, aussi bien COM 400 que RAD 500, pour ne délivrée en sortie qu'une seule information consolidée.

L'architecture du capteur 10 va maintenant être présentée plus en détail, en référence aux figures 3 à 5.

### ETAGE DE RECEPTION 100

Comme représenté schématiquement sur la figure 3, l'étage 100 mutualise les ressources matérielles nécessaires à l'interception à la fois d'émissions RAD et d'émissions COM.

L'étage 100 comporte un ou plusieurs réseaux antennaires 110. Chaque réseau comporte au moins une antenne.

L'étage 100 comporte NR réseaux d'antennes 110. Chaque réseau antennaire est constitué par NVA antennes élémentaires. Chaque antenne transforme les signaux électromagnétiques incidents en signaux électriques.

Dans le mode de réalisation préféré, chaque réseau est un réseau antennaire à diversité de polarisation par sous-gamme fréquentielle. Les antennes d'un même réseau d'antennes sont ainsi réparties en deux groupes : les antennes d'un premier groupe sont adaptées à une polarisation et les antennes d'un second groupe sont adaptées à la polarisation orthogonale de celle du premier groupe. Par exemple, si les antennes du premier groupe sont adaptées à une polarisation horizontale, les antennes du second groupe seront adaptées à une polarisation verticale. Par exemple encore, si les antennes du premier groupe sont adaptées à une polarisation circulaire droite, les antennes du second groupe seront adaptées à une polarisation circulaire gauche. Cela permet de recevoir des signaux électromagnétiques quelle que soit leur polarisation.

Le nombre de réseaux est fonction de la couverture fréquentielle recherchée pour le capteur 10. Chaque réseau d'antenne est associé à un domaine fréquentiel particulier.

Le nombre NR de réseau d'antennes, le nombre NVA d'antennes par réseau ainsi que la géométrie des réseaux d'antennes sont choisis par l'homme du métier en fonction des compromis entre les contraintes d'intégration des réseaux d'antennes sur la plate-forme, des masques entre antennes, de la sensibilité de réception, du coût et, lorsque la caractérisation des signaux radioélectriques nécessite une estimation de la direction d'arrivée, de la précision et de la protection aux ambiguïtés de l'estimation de la direction d'arrivée.

NR x NVA signaux électriques sont délivrés en sortie de l'ensemble des réseaux du capteur.

L'étage 100 comporte un commutateur d'antennes 120, commun aux différents réseaux d'antennes 110.

Le commutateur d'antennes 120 prend en entrée les signaux électriques issus des NVA antennes de chacun des NR réseaux. Le commutateur d'antennes 120 sélectionne un réseau d'antennes parmi les NR réseaux d'antennes et délivre en sortie les NVA signaux électriques des antennes du réseau d'antennes sélectionné.

Le commutateur d'antennes 120 permet d'injecter des signaux de tarage en lieu et place des signaux issus des différentes antennes.

L'étage 100 comporte enfin un récepteur radiofréquence 130 à NVA voies de réception. Le récepteur radiofréquence 130 prend en entrée les NVA signaux électriques en sortie du commutateur d'antennes 120, c'est-à-dire issus des NVA antennes du réseau sélectionné.

De préférence, il s'agit d'un récepteur radiofréquence multivoies synchrones.

Le récepteur radiofréquence 130 convertit les signaux électriques à l'intérieur d'une bande passante instantanée BPI située autour d'une fréquence d'accord de réception à laquelle le récepteur radiofréquence 130 est réglé dynamiquement. La bande BPI du récepteur 130 ainsi que la dynamique instantanée multi-ton qui en découle doivent être adaptées à l'environnement à observer.

Le signal obtenu en sortie de chaque voie de réception est numérisé après des opérations d'amplification, de filtrage et, suivant la fréquence de réception, d'une ou plusieurs transpositions en fréquence ou non.

Le récepteur radiofréquence 130 délivre en sortie NVA signaux numériques synchrones correspondant à la bande BPI et la fréquence d'accord du récepteur.

### ETAGE DE TRAITEMENTS D'ANALYSE PRIMAIRE 200

L'étage de traitements d'analyse primaire 200 constitue une chaîne de traitement numérique du signal, effectuant une analyse primaire des signaux élémentaires reçus dans la bande BPI quel que soit leur type, c'est-à-dire sans hypothèse sur la nature de ce signal.

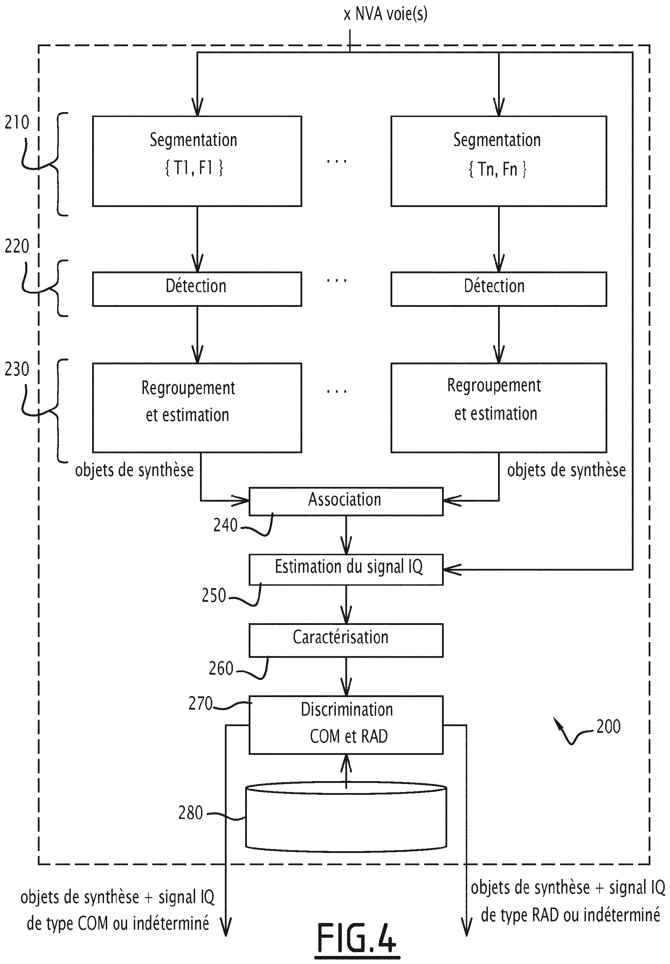

Dans le mode de réalisation représenté à la figure 4, l'étage 200 comporte un module 210 de segmentation temps-fréquence du signal pour chacune des NVA voies de réception synchrones du récepteur radiofréquence 130.

Lorsqu'il est exécuté, le module 210 prend en entrée le signal numérique de la voie considérée.

Le signal numérique est découpé, de manière synchrone aux autres voies, en temps et en fréquence. Ce découpage est par exemple effectué à l'aide d'un banc de filtres ou d'une transformée de Fourier.

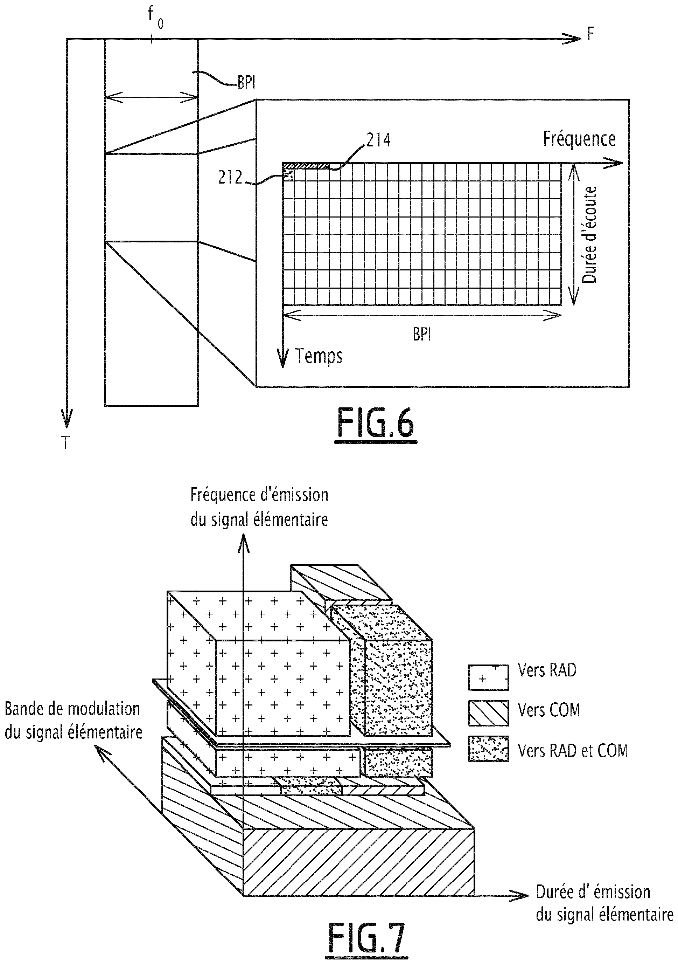

Le module 210 segmente le signal avec au moins deux résolutions d'analyse temps-fréquence, mises en œuvre simultanément. Sur la figure 6, qui est une représentation temps T - fréquence F, n résolutions {Ti, Fi} sont utilisées simultanément pour segmenter le domaine durée d'écoute - bande passante instantanée BPI centrée autour de la fréquence f0. Cela permet au capteur 10 d'être adapté à l'ensemble des formes d'onde possibles.

Les résolutions d'analyse fréquentielle utilisées peuvent changer d'une bande BPI à l'autre afin d'être les plus adaptées possible aux formes d'onde des émissions de communication et des émissions radar susceptibles d'être interceptées.

Par exemple, on peut choisir, dans le domaine VHF, d'utiliser la résolution temps-fréquence {800 µs, 12,5 kHz}, case 212 à la figure 6, conjointement à la résolution temps-fréquence {10 µs, 1 MHz }, case 214 à la figure 6.

Pour faciliter la mise en œuvre de l'étape d'association (réalisée par le module 240 présenté ci-dessous), les résolutions fréquentielles doivent être des multiples entiers de la plus petite résolution fréquentielle et les résolutions temporelles doivent être des multiples entiers de la plus petite résolution temporelle.

L'étage 200 comporte ensuite un module 220 de détection et de dénombrement.

Lorsqu'il est exécuté, ce module réalise une détection dans chacune des cases temps-fréquence pour y déterminer la présence ou non d'au moins un signal utile plus ou moins noyé dans le bruit.

La détection peut être réalisée de manière conventionnelle par une estimation de la matrice de covariance calculée sur les NVA voies et la comparaison des valeurs propres de la matrice de covariance obtenue avec un seuil de détection.

Le seuil de détection correspond classiquement à un rapport signal à bruit choisi pour obtenir une probabilité de détection et une probabilité de fausse alarme désirées. Pour déterminer ce seuil, il faut donc estimer le niveau de bruit.

Par rapport aux solutions conventionnelles, l'estimation du niveau de bruit est ici avantageusement réalisée en faisant la moyenne, pour l'ensemble des cases réparties dans la bande passante instantanée BPI d'une tranche de temps considérée, des valeurs propres les plus faibles, en prenant comme hypothèse que toutes les cases ne seront pas occupées par un signal utile.

Ce principe permet d'avoir une estimation plus précise du niveau de bruit et également d'augmenter la capacité de dénombrement du nombre de sources co-canal (c'est-à-dire du nombre de signaux utiles présents dans une même case temps-fréquence) par rapport aux méthodes qui cherchent à différencier les valeurs propres des signaux utiles vis-à-vis des valeurs propres du bruit dans un seul canal.

En variante, une autre méthode de détection peut être réalisée par le module 220, consistant à comparer le niveau d'énergie en sortie de la formation de faisceau des NVA voies par rapport à un seuil de détection ou encore par la comparaison de la trace de la matrice de covariance de chaque case par rapport à un seuil de détection.

Dans encore une autre variante, la détection peut être réalisée par seuillage de l'intégration de l'énergie des cases voisines (intégration incohérente sur un domaine temps/fréquence) lorsque le coût de calcul des matrices de covariance est trop important pour être fait systématiquement.

L'étage 200 comporte ensuite un module 230 de regroupement des détections et de caractérisation de ces regroupements.

Lorsqu'il est exécuté, le module 230 estime des caractéristiques primaires des détections à partir de la matrice de covariance. Ces caractéristiques primaires sont par exemple la date d'arrivée, la direction d'arrivée, la polarisation, le niveau, la bande, la durée, la fréquence, le rapport signal à bruit, etc., du signal détecté.

En particulier, le traitement d'estimation de la direction d'arrivée de chaque détection exploite la diversité en polarisation des réseaux antennaires pour séparer les sources co-canal (émission concomitante dans la case temps-fréquence d'analyse), à l'aide d'algorithmes classiques.

En variante, le traitement d'estimation de la direction d'arrivée de source co-canal est remplacé par un traitement d'estimation de la direction d'arrivée mono-source.

Puis le module 230 regroupe les signaux détectés en objet de synthèse. Pour un signal COM, un tel objet est connu sous la dénomination de plot, mais pour un signal RAD, un tel objet est connu sous la dénomination d'impulsion.

Le module 230 agrège l'ensemble les détections issues d'un même signal segmenté, lorsqu'elles sont contiguës en temps et/ou en fréquence et qu'elles peuvent appartenir au même signal électromagnétique élémentaire. Pour cela une estimation des similitudes entre signaux détectés voisins est réalisée, par exemple via le calcul d'une distance de Mahalanobis, sur les caractéristiques primaires, notamment la direction d'arrivée et la polarisation.

Dans une variante, l'estimation de la direction d'arrivée est supprimée et le regroupement des signaux détectés est effectué uniquement sur des critères de proximité temps, fréquence, et éventuellement de niveau.

L'objet de synthèse résume alors les caractéristiques des regroupements soit via une fusion des caractéristiques de chacun des signaux détectés, soit via une nouvelle estimation des caractéristiques sur la zone temps-fréquence représentant le regroupement des signaux détectés.

L'étage 200 comporte ensuite un module 240 d'association permettant de choisir le meilleur objet de synthèse, représentant un signal utile, parmi les n résolutions d'analyse temps-fréquence mise en œuvre.

Lorsqu'il est exécuté, le module 240 prend en entrée les objets de synthèse délivrés par le module 230 et compare les objets concomitants en temps et en fréquence pour retenir les m objets offrant une synthèse du signal électromagnétique incident avec le meilleur rapport signal à bruit, c'est-à-dire avec la résolution d'analyse temps-fréquence la plus adaptée au signal électromagnétique incident. Les m objets sélectionnés sont transmis au module suivant d'estimation du signal.

L'étage 200 comporte ensuite un module 250 d'estimation du signal IQ.

Lorsqu'il est exécuté, le module 250 prend en entrée chacun des m objets de synthèse représentant les m signaux utiles détectés, ainsi que les signaux élémentaires issus des voies du récepteur radiofréquence 130.

Le module 250 isole, dans la bande BPI, le signal élémentaire correspondant à chacun des m objets. L'isolation de chaque signal élémentaire s'effectue par des opérations classiques de filtrages/décimations fréquentiels, éventuellement complétées par des traitements de filtrage spatial, notamment par formation de voie.

Cette étape délivre en sortie, pour chaque objet de synthèse, l'objet de synthèse accompagné du signal en bande de base correspondant, signal dénommé signal IQ.

L'étage 200 comporte ensuite un module 260 de caractérisation du signal.

Lorsqu'il est exécuté, le module 260 permet, à partir du signal IQ de chaque objet, d'affiner les caractéristiques primaires du signal élémentaire, élaborées par le module 230, notamment l'estimation de la date d'arrivée, de la durée du signal et de la bande du signal. L'estimation de la date d'arrivée, de la durée et de la bande est réalisée à l'aide de méthodes conventionnelles.

L'étage 200 comporte ensuite un module 270 de discrimination des signaux.

Lorsqu'il est exécuté, le module 270 étiquette, à partir de leurs caractéristiques primaires, chacun des signaux élémentaires associés aux objets de synthèse soit en émission COM, soit en émission RAD, soit en émission indéterminée lorsque le signal est inconnu ou qu'il existe une ambiguïté entre émission COM et émission RAD.

En sortie, le module 270 aiguille vers le traitement secondaire adapté. Ainsi, un objet de synthèse, avec son signal IQ, classé en tant qu'émission COM ou émission indéterminée, est orienté vers la chaîne 400 de traitements d'analyse secondaire adaptée aux émissions de communication, tandis qu'un objet de synthèse, avec son signal IQ, classé en tant qu'émission RAD ou émission indéterminée est orienté vers la chaîne 500 de traitements d'analyse secondaire adaptés aux émissions radar.

Pour effectuer cette discrimination entre des signaux COM et des signaux RAD, le module 270 compare les estimations de durée, de fréquence et de bande de modulation des signaux élémentaires reçus vis-à-vis de gabarits de durée d'émission / fréquence d'émission / bande de modulation.

Comme illustré par la figure 7, différents gabarits COM, RAD ou COM et RAD sont prédéfinis et stockés dans une base de données 280. Ces gabarits synthétisent les connaissances a priori des formes d'onde COM et des formes d'onde RAD.

L'élaboration des gabarits s'appuie sur un modèle de données qui permet de décrire, selon des paramètres communs, les signaux élémentaires, aussi bien les émissions de communication que les émissions radar.

Ainsi, les traitements d'analyse primaire mis en œuvre correspondent aux traitements de détection, de radiogoniométrie et d'estimation du signal. Ces traitements sont réalisés avec plusieurs résolutions d'analyse temps-fréquence simultanées, fonction de chaque gamme de fréquence, afin d'être adaptés à l'ensemble des formes d'onde COM et RAD que ces formes d'onde soient continues (COM CW, radar FMCW,...) ou impulsionnelles (palier EVF, burst TDMA, impulsions radar...), bande étroite ou large bande. Les traitements d'analyse primaire disposent également d'une capacité de séparation de sources concomitantes ou co-canal pour analyser les émissions superposées. Les estimations des signaux élémentaires réalisées par ces traitements d'analyse primaire (durée, largeur de bande, niveau, direction d'arrivée, polarisation, extraction du signal lui-même...) sont orientées vers les traitements d'analyse secondaire adaptés en fonction des estimations primaires et des connaissances a priori sur les émissions radioélectriques.

### ETAGE 300 DE TRAITEMENTS SECONDAIRES

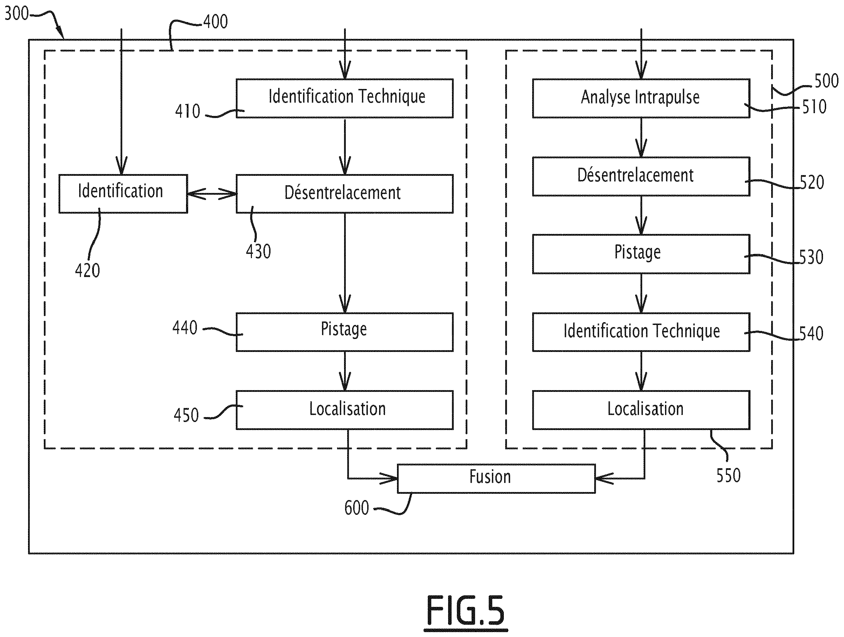

En sortie de l'étage 200 de traitements d'analyse primaire permettant une analyse intégrée des signaux quel que soit leur type, l'étage 300 de traitements d'analyse secondaire comporte, comme représenté schématiquement sur la figure 5, une chaîne 400 dédiée à l'analyse des émissions COM et une chaîne 500 dédiée à l'analyse des émissions RAD.

Chacune de ces chaînes 400, 500 effectue des traitements conventionnels que l'on retrouve dans les capteurs de réception COM et dans les capteurs de réception RAD respectivement.

La chaîne 400 comporte ainsi :
- Un module 410 d'identification technique COM systématique ;
- Un module 420 d'identification technique sur requête ;
- Un module 430 de désentrelacement ;
- Un module 440 de pistage d'une source d'émission ; et,
- Un module 450 de localisation de la source COM pistée.

La chaîne 500 comporte ainsi :
- Un module 510 d'analyse intrapulse ;
- Un module 520 de désentrelacement ;
- Un module 530 de pistage d'une source d'émission ;
- Un module 540 d'identification technique de la source RAD pistée ; et,
- Un module 550 de localisation de la source RAD pistée.

Le module de localisation 450 et le module de localisation 550 peuvent être avantageusement mutualisés. Ce ou ces modules de localisation permettent d'estimer la position des émetteurs COM et RAD et ils peuvent utiliser les techniques conventionnelles de localisation comme, par exemple, la localisation par défilement lorsque la plate-forme porteuse d'un capteur 10 est mobile par rapport à des sources de signaux fixes ou la localisation par triangulation à l'aide de plusieurs capteurs 10 mis en réseau.

L'identification technique d'une source d'émission établit une liste d'émetteurs candidats par comparaison entre les caractéristiques techniques analysées de ladite source d'émission et les caractéristiques techniques des émissions pouvant être rencontrées en utilisation, et mémorisées dans une base de données, une telle base de données s'appuyant sur une modélisation des formes d'onde de communication et une modélisation des formes d'onde radar. Ainsi l'identification technique RAD conduit à une liste de modes ou sous-modes d'émissions RAD et l'identification technique COM conduit à une liste de modes de transmission COM. Pour les applications militaires, ces modes et sous-modes d'émission RAD et modes de transmission COM peuvent être rattachés à une liste probable d'émetteurs, de plates-formes ou de systèmes d'arme connus.

Dans le capteur RAD/COM intégré 10, les traitements secondaires sont adaptés pour fournir les caractéristiques des pistes, utiles à un module 600 de fusion, destiné, lorsqu'il est exécuté, à produire une information consolidée sur chaque émission interceptée, en précisant notamment sa nature (émetteur radar ou émetteur de radiocommunication) et ses caractéristiques.

De manière générale, l'opération de fusion permet de synthétiser dans un méta-objet, des données de nature différentes provenant respectivement des traitements RAD et COM. Cette opération permet aussi de supprimer les éventuelles redondances lorsque des signaux élémentaires ont été aiguillés par le module 270 à la fois vers la chaîne 400 de traitements d'analyse secondaire adaptée aux émissions de communication et la chaîne 500 de traitements d'analyse secondaire adaptée aux émissions radar.

Par exemple, si un signal élémentaire envoyé aux chaînes 400 et 500 de traitements d'analyse secondaire conduit à l'identification technique d'un mode de transmission COM et à aucune identification technique d'un mode ou sous-mode RAD, alors la piste issue de la chaîne de traitements RAD sera éliminée.

Par exemple encore, si la localisation de la source RAD et celle de la source COM sont cohérentes géographiquement et/ou temporellement et si le croisement des listes des modes ou sous-modes RAD et des modes de transmission COM permet d'identifier une plate-forme commune, alors les données issues de chaque chaîne de traitement sont regroupées pour ne présenter à l'opérateur qu'un objet de haut niveau ayant un sens opérationnel pour ce dernier.

Il est à noter qu'avec le capteur 10, la couverture fréquentielle d'interception et la précision de mesure de la direction d'arrivée sont identiques pour les émissions radar et pour les émissions de communication.

Le capteur 10 comporte au moins une unité de calcul comportant des moyens de calcul, tels qu'un processeur, et des moyens de mémorisation, tels que des mémoires vive et morte, les moyens de mémorisation stockant les instructions de programmes d'ordinateur propres à être exécutées par les moyens de calcul.

En particulier, les modules des étages de traitements d'analyse primaire ou secondaire venant d'être décrits correspondent à des instructions de programmes d'ordinateur propres à être exécutées par les moyens de calcul. Lorsqu'il est appelé, un module permet la mise en œuvre d'une étape correspondante.

Ainsi, ce qui a été décrit précédemment en termes de dispositif, pourrait également être décrit en termes de procédé, notamment de procédé de traitement d'analyse primaire et de procédé de traitements d'analyse secondaire. De préférence, ces programmes sont exécutés en temps réel sur les signaux délivrés par l'étage de réception.

### AVANTAGES

Les avantages du capteur présenté ci-dessus, par rapport aux solutions conventionnelles juxtaposant des capteurs COM et des capteurs RAD, sont nombreux.

Le capteur 10 permet une diminution des ressources nécessaires, celles-ci étant rationnalisées et mutualisées pour effectuer une réception et une caractérisation primaire des signaux élémentaires, quelle que soit leur nature.

La mutualisation des ressources et des traitements nécessite de prendre en compte la diversité des caractéristiques des émissions radars et des émissions de radiocommunications :
Diversité des polarisations : polarisation verticale, polarisation horizontale, polarisation circulaire...
Diversité des formes d'onde : forme d'onde continue (radar FMCW...) ou impulsionnelle (palier EVF, burst TDMA, impulsion radar...).
Diversité de la bande de la forme d'onde : bande étroite ou large bande.

De plus, les origines diverses des signaux à intercepter rend ces derniers polymorphes, au sens de leur couverture spectrale et temporelle. Ceci impose que l'analyse primaire du signal soit capable de s'adapter à toute forme de signal.

La diminution des ressources nécessaires permet de faciliter l'intégration du capteur 10 sur une unique plate-forme en réduisant la masse, le volume et la consommation électrique.

Le capteur 10 permet une meilleure prise en compte de la complexité de l'environnement radioélectrique : les signaux élémentaires extraits de la juxtaposition et de l'enchevêtrement des émissions de communications et des émissions radar sont séparés de manière plus efficace.

De plus l'analyse primaire RAD/COM intégrée permet, à partir des caractéristiques primaires des signaux élémentaires et de connaissances a priori, d'orienter ces signaux élémentaires vers les traitements COM et les traitements RAD les plus adaptés. Ceci permet à ces traitements secondaires spécifiques RAD ou COM de ne pas être perturbés par la présence de signaux COM ou RAD, respectivement.

Le suivi dans le temps d'une interception (aussi dénommé « pistage de l'émetteur ») doit faire face à un grand nombre d'ambiguïtés à cause de la présence de nombreux émetteurs semblables dans le spectre. Ceci impose aux traitements de devoir tirer parti au mieux des spécificités de chaque signal intercepté. Il s'ensuit qu'il est nécessaire que le capteur dispose d'une analyse secondaire permettant un traitement de données spécifique au suivi des émissions RAD et un autre spécifique au suivi des émissions COM.

Le présent capteur est particulièrement adapté à l'évolution des émissions radioélectriques. En effet, il ne fait pas d'hypothèses a priori sur les formes d'onde interceptées (uniquement RAD ou uniquement COM). Le capteur 10 est ainsi capable de traiter toutes les émissions radar et de radiocommunications, aussi bien actuelles qu'à venir. Les émetteurs vont chercher à optimiser leur occupation spectrale (répartition de l'allocation des fréquences par les autorités de régulation de plus en plus difficile du fait des besoins toujours croissants de canaux de communication), leur durée (pour des besoins de discrétion, et de partage de créneau) que la puissance crête émise (étalement temps/fréquence).

## Revendications

1. Capteur (10) d'interception des signaux radioélectriques, **caractérisé en ce qu'**il est adapté pour analyser des émissions radar (RAD) et des émissions de communication (COM), et **en ce qu'**il comporte :
- un étage (100) de réception, commun et propre à numériser un signal radioélectrique incident ;
- un étage (200) de traitements d'analyse primaire, commun et propre à prétraiter le signal numérisé de manière à déterminer une pluralité de caractéristiques primaires du signal radioélectrique incident ; et,
- un étage (300) de traitements d'analyse secondaire, comportant une chaîne (400) de traitements d'analyse du signal numérisé prétraité dédiée aux émissions de communication (COM) et une chaîne (500) de traitements d'analyse du signal numérisé prétraité dédiée aux émissions radar (RAD),
l'étage (200) de traitements d'analyse primaire comportant un module (270) de discrimination propre à appliquer le signal numérisé prétraité en entrée de la chaîne (400) dédiée aux émissions de communication (COM) et/ou en entrée de la chaîne (500) dédiée aux émissions radar (RAD), en fonction des caractéristiques primaires déterminées pour le signal radioélectrique incident.

2. Capteur (10) selon la revendication 1, dans lequel l'étage de réception comporte :
- une pluralité de réseaux d'antennes (110), chaque réseau d'antennes comportant au moins une antenne et étant associé à un domaine fréquentiel particulier ;
- un commutateur d'antennes (120) pour sélectionner les signaux électriques générés par un réseau d'antennes parmi la pluralité de réseaux d'antennes ; et,
- un récepteur radiofréquence (130) dont le nombre de voies est égal au nombre d'antennes du réseau d'antennes sélectionné, chaque voie étant propre à numériser le signal électrique en sortie d'une antenne correspondante du réseau d'antennes sélectionné, de préférence le récepteur étant synchrone.

3. Capteur (10) selon la revendication 2, dans lequel chaque réseau d'antennes est un réseau d'antennes à diversité de polarisation par sous-gamme fréquentielle.

4. Capteur selon la revendication 2 ou la revendication 3, dans lequel l'étage (200) de traitements d'analyse primaire comporte un module (210) de segmentation temps-fréquence d'un signal numérique pour chacune des voies du récepteur radiofréquence (130), de préférence le module (210) de segmentation étant propre à segmenter le signal numérique selon au moins deux résolutions d'analyse temps-fréquence différentes, de préférence encore les résolutions d'analyse temps-fréquence étant variables en fonction des gammes de fréquence.

5. Capteur selon la revendication 4, dans lequel l'étage (200) de traitements d'analyse primaire comporte un module (220) de détection propre à vérifier la présence d'au moins un signal utile mélangé à un bruit dans chacune des cases temps-fréquence du ou de chaque signal segmenté en sortie du module (210) de segmentation temps-fréquence, de préférence le bruit étant estimé par détermination des valeurs propres les plus faibles de la matrice de covariance sur l'ensemble des cases d'analyse temps-fréquence du signal segmenté correspondant.

6. Capteur selon la revendication 5, dans lequel l'étage (200) de traitements d'analyse primaire comporte un module (230) de regroupement des détections propre à estimer, pour chaque détection, une pluralité de caractéristiques primaires parmi une date d'arrivée, une direction d'arrivée, une polarisation, un niveau, une bande, une durée, une fréquence, un rapport signal à bruit du signal radioélectrique incident correspondant à la détection considérée et à agréger les détections entre elles pour former un objet de synthèse, par la mise en oeuvre de critères de contiguïté en temps et/ou en fréquence, et/ou de similarité selon les valeurs d'une ou plusieurs des caractéristiques primaires.

7. Capteur selon la revendication 6, dans lequel l'étage (200) de traitements d'analyse primaire comporte un module (240) d'association permettant de choisir le meilleur objet de synthèse parmi les objets de synthèse dérivant de chacun des signaux segmentés en sortie du module (210).

8. Capteur selon la revendication 4, dans lequel l'étage (200) de traitements d'analyse primaire comporte un module (250) d'estimation du signal IQ associé au meilleur objet de synthèse, le signal IQ étant isolé du signal numérique de la voie correspondante du récepteur radiofréquence (130) par filtrage/décimation et éventuellement par filtrage spatial.

9. Capteur selon l'une quelconque des revendications 1 à 8, dans lequel le module (270) de discrimination détermine à quelle chaîne transmettre le signal prétraité, en fonction des caractéristiques primaires et d'une connaissance a priori sur les formes d'onde des émissions de communication (COM) et les formes d'onde des émissions radar (RAD).

10. Capteur (10) selon la revendication 9, dans lequel la connaissance a priori prend la forme d'une pluralité de gabarits durée d'émission / fréquence d'émission / bande de modulations de signaux élémentaires.

11. Capteur (10) selon l'une quelconque des revendications 1 à 10, dans lequel l'étage (300) de traitements d'analyse secondaire comporte un module (600) de fusion propre à générer une information consolidée sur chaque émission interceptée à partir des sorties de la chaîne (400) dédiée aux émissions de communication (COM) et de la chaîne (500) dédiée aux émissions radar (RAD), notamment en permettant la suppression d'une éventuelle redondance lorsque des signaux élémentaires ont été aiguillés par le module (270) de discrimination à la fois vers la chaîne (400) dédiée aux émissions de communication (COM) et la chaîne (500) dédiée aux émissions radar (RAD).

## Patentansprüche

1. Sensor (10) zum Abfangen von Funksignalen, **dadurch gekennzeichnet, dass** er angepasst ist, um Radaremissionen (RAD) und Kommunikationsemissionen (COM) zu analysieren, und dass er Folgendes umfasst:
- eine gemeinsame Stufe (100) zum Empfangen und die zur Digitalisierung eines eingehenden Funksignals geeignet ist;
- eine Stufe (200) gemeinsamer, primärer Analyseverarbeitungen, die geeignet ist, um das digitalisierte Signal vorverarbeitet, um eine Vielzahl von primären Merkmalen des eingehenden Funksignals zu bestimmen; und
- eine Stufe (300) sekundärer Analyseverarbeitungen, umfassend eine Kette (400) von Analyseverarbeitungen des vorverarbeiteten digitalisierten Signals, die den Kommunikationsemissionen (COM) gewidmet sind, und eine Kette (500) von Analyseverarbeitungen des vorverarbeiteten digitalisierten Signals, die den Radaremissionen (RAD) gewidmet sind,
die Stufe (200) primärer Analyseverarbeitungen umfassend ein Modul (270) zur Entkoppplung, das geeignet ist, das vorverarbeitete digitalisierte Signal auf den Eingang der Kette (400), die den Kommunikationsübertragungen (COM) gewidmet ist, und/oder auf den Eingang der Kette (500), die den Radarübertragungen (RAD) gewidmet ist, entsprechend den für das eingehende Funksignal bestimmten primären Merkmalen anzuwenden.

2. Sensor (10) nach Anspruch 1, wobei die Empfangsstufe Folgendes umfasst:
- eine Vielzahl von Antennengruppen (110), jede Antennengruppe umfassend mindestens eine Antenne, und die mit einem jeweiligen Frequenzbereich assoziiert ist;
- einen Antennenschalter (120) zum Auswählen der elektrischen Signale, die von einer Antennengruppe aus der Vielzahl der Antennengruppen erzeugt werden; und
- einen Funkfrequenzempfänger (130), dessen Anzahl von Kanälen gleich wie die Anzahl von Antennen der ausgewählten Antennengruppe ist, wobei jeder Kanal geeignet ist, um das elektrische Signal am Ausgang einer entsprechenden Antenne der ausgewählten Antennengruppe zu digitalisieren, wobei der Empfänger vorzugsweise synchron ist.

3. Sensor (10) nach Anspruch 2, wobei jede Antennengruppe eine Antennengruppe mit Polarisationsvielfacher pro Frequenzteilbereich ist.

4. Sensor nach Anspruch 2 oder Anspruch 3, wobei die Stufe (200) primärer Analyseverarbeitungen ein Modul (210) zur Zeit-Frequenz-Segmentierung eines digitalen Signals für jeden der Kanäle des Funkfrequenzempfängers (130) umfasst, vorzugsweise wobei das Modul (210) zur Segmentierung geeignet ist, das digitale Signal gemäß mindestens zwei unterschiedlichen Zeit-Frequenz-Analyseauflösungen zu segmentieren, wobei vorzugsweise auch die Zeit-Frequenz-Analyseauflösungen in Abhängigkeit von den Frequenzbereichen variabel sind.

5. Sensor nach Anspruch 4, bei dem die Stufe (200) primärer Analyseverarbeitungen ein Detektionsmodul (220) umfasst, das geeignet ist, um das Vorhandensein mindestens eines mit Rauschen vermischten Nutzsignals in jedem der Zeit-Frequenz-Felder des oder jedes segmentierten Signals am Ausgang des Moduls (210) zur Zeit-Frequenz-Segmentierung zu überprüfen, wobei das Rauschen vorzugsweise durch Bestimmung der niedrigsten Eigenwerte der Kovarianzmatrix über alle Zeit-Frequenz-Analyse-Felder des entsprechenden segmentierten Signals geschätzt wird.

6. Sensor nach Anspruch 5, wobei die Stufe (200) primärer Analyseverarbeitungen ein Modul (230) zur Gruppierung der Erfassungen umfasst, das geeignet ist, um für jede Erfassung eine Vielzahl von primären Merkmalen zu schätzen, darunter ein Ankunftsdatum, eine Ankunftsrichtung, eine Polarisation, ein Pegel, ein Band, eine Dauer, eine Frequenz, ein Signal-Rausch-Verhältnis des eingehenden Funksignals, das der betrachteten Erfassung entspricht, und um die Erfassungen durch Anwendung von Kriterien der zeitlichen und/oder frequenzmäßigen Kontiguität und/oder der Ähnlichkeit gemäß den Werten eines oder mehrerer primärer Merkmale zu einem Syntheseobjekt zusammenzufassen.

7. Sensor nach Anspruch 6, wobei die Stufe (200) primärer Analyseverarbeitungen ein Modul (240) zur Assoziation umfasst, das es ermöglicht, das beste Syntheseobjekt aus den Syntheseobjekten auszuwählen, die von jedem der segmentierten Signale am Ausgang des Moduls (210) abgeleitet sind.

8. Sensor nach Anspruch 4, wobei die Stufe (200) primärer Analyseverarbeitungen ein Modul (250) zur Schätzung des IQ-Signals umfasst, das mit dem besten Syntheseobjekt assoziiert ist, wobei das IQ-Signal von dem digitalen Signal des entsprechenden Kanals des Funkfrequenzempfängers (130) durch Filterung/Dezimierung und möglicherweise durch räumliche Filterung isoliert wird.

9. Sensor nach einem der Ansprüche 1 bis 8, wobei das Modul (270) zur Entkoppplung bestimmt, auf welchen Kanal das vorverarbeitete Signal zu übertragen ist, abhängig von den primären Merkmale und einer vorherigen Kenntnis der Wellenformen der Kommunikationemissions (COM) und der Wellenformen der Radaremissionen (RAD).

10. Sensor (10) nach Anspruch 9, wobei die vorherige Kenntnis die Form einer Vielzahl von Übertragungsdauer-/Sendefrequenz-/Modulationsband-Schablonen von Elementarsignalen annimmt.

11. Sensor (10) nach einem der Ansprüche 1 bis 10, wobei die Stufe (300) sekundärer Analyseverarbeitungen ein Modul (600) zur Fusion umfasst, das geeignet ist, um anhand der Ausgänge der Kette (400) für Kommunikationsemissionen (COM) und der Kette (500) für Radaremissionen (RAD) konsolidierte Informationen über jede abgefangene Übertragung zu erzeugen, insbesondere durch Ermöglichen der Unterdrückung einer möglichen Redundanz, wenn elementare Signale durch das Modul (270) zur Entkopplung sowohl an die Kette (400) für Kommunikationsemissionen (COM) als auch an die Kette (500) für Radaremissionen (RAD) weitergeleitet wurden.

## Claims

1. A sensor (10) for intercepting radioelectric signals, **characterized in that** it is suitable for analyzing radar emissions (RAD) and communication emissions (COM), and **in that** it includes:
- a reception stage (100), common and capable of digitizing an incident radioelectric signal;
- a primary analysis processing stage (200), common and capable of preprocessing the digitized signal so as to determine a plurality of primary characteristics of the incident radioelectric signal; and
- a secondary analysis processing stage (300), including a processing chain (400) for analyzing the preprocessed digitized signal dedicated to communication emissions (COM), and a processing chain (500) for analyzing the preprocessed digitized signal dedicated to radar emissions (RAD),
the primary analysis processing stage (200) including a discrimination module (270) adapted for applying the preprocessed digitized signal at the input of the chain (400) dedicated to communication emissions (COM) and/or at the input of the chain (500) dedicated to radar emissions (RAD), based on primary characteristics determined for the incident radioelectric signal.

2. The sensor (10) according to claim 1, wherein the reception stage includes:
- a plurality of antenna arrays (110), each antenna array including at least one antenna and being associated with a specific frequency domain;
- an antenna switch (120) for selecting the electric signals generated by an antenna array from among the plurality of antenna arrays; and
- a radiofrequency receiver (130), the number of channels of which is equal to the number of antennas of the selected antenna array, each channel being adapted for digitizing the electric signal at the output of a corresponding antenna of the selected antenna array, the receiver preferably being synchronous.

3. The sensor (10) according to claim 2, wherein each antenna array is a frequency sub-range polarization diversity antenna array.

4. The sensor according to claim 2 or claim 3, wherein the primary analysis processing stage (200) includes a module (210) for time-frequency segmentation of a digital signal for each of the channels of the radiofrequency receiver (130), preferably the segmentation module (210) is adapted for segmenting the digital signal according to at least two different time-frequency analysis resolutions, still more preferably the time-frequency analysis resolutions being variable based on frequency ranges.

5. The sensor according to claim 4, wherein the primary analysis processing stage (200) includes a detection module (220) adapted for verifying the presence of at least one useful signal mixed with noise in each of the time-frequency boxes of the or each segmented signal at the output of the time-frequency segmentation module (210), the noise preferably being estimated by determining the lowest specific values of the covariance matrix of all of the time-frequency analysis boxes of the corresponding segmented signal.

6. The sensor according to claim 5, wherein the primary analysis processing stage (200) includes a module (230) for grouping together detections adapted for estimating, for each detection, a plurality of primary characteristics from among a date of arrival, a direction of arrival, a polarization, a level, a band, a duration, a frequency, a signal-to-noise ratio of the incident radioelectric signal corresponding to the considered detection, and aggregating the detections with one another to form a synthesis object, by implementing adjacency criteria in terms of time and/or frequency, and/or similarity depending on the values of one or several of the primary characteristics.

7. The sensor according to claim 6, wherein the primary analysis processing stage (200) includes an associating module (240) making it possible to choose the best synthesis object from among the synthesis objects each derived from segmented signals at the output of the module (210).

8. The sensor according to claim 4, wherein the primary analysis processing stage (200) includes a module (250) for estimating the signal IQ associated with the best synthesis object, the signal IQ being isolated from the digital signal of the corresponding channel of the radiofrequency receiver (130) by filtering/decimation and optionally by spatial filtering.

9. The sensor according to any one of claims 1 to 8, wherein the discrimination module (270) determines the chain to which to send the preprocessed signal, based on primary characteristics and *a priori* knowledge of the waveforms of the communication emissions (COM) and the waveforms of the radar emissions (RAD).

10. The sensor (10) according to claim 9, wherein the *a priori* knowledge takes the form of a plurality of emission duration / emission frequency / elementary signal modulation band templates.

11. The sensor (10) according to any one of claims 1 to 10, wherein the secondary analysis processing stage (300) includes a merging module (600) adapted for generating consolidated information on each emission intercepted from the outputs of the chain (400) dedicated to communication emissions (COM) and the chain (500) dedicated to radar emissions (RAD), in particular by allowing the suppression of any redundancy when elementary signals have been pointed, by the discrimination module (270), both toward the chain (400) dedicated to communication emissions (COM) and the chain (500) dedicated to radar emissions (RAD).
